# EUROPÄISCHE PATENTANMELDUNG

(11) **EP 4 141 081 A1**
(43) Veröffentlichungstag der Anmeldung: **01.03.2023**
(21) Anmeldenummer: 21193859.2
(22) Anmeldetag: 30.08.2021
(51) Int. Cl.: C09J 7/00, C09J 7/35, C09J 7/38

(54) **KLEBEELEMENT**

(71) Anmelder: Hueck Folien Gesellschaft m.b.H., 4342 Baumgartenberg (AT)
(72) Erfinder: FUCHSBAUER, Anita, 4030 Linz (AT); EGGINGER, Martin, 4040 Linz (AT); TRASSL, Stephan, 4342 Baumgartenberg (AT); AIGNER, Georg, 4482 Ennsdorf (AT)
(74) Vertreter: Burger, Hannes

(57) **Zusammenfassung**

Die Erfindung betrifft ein Klebeelement (1) umfassend ein Trägersubstrat (2) und eine an dem Trägersubstrat (2) angeordnete Klebeschicht (3). Dabei ist vorgesehen, dass das Klebeelement (1) zumindest ein recyceltes Material (4), und/oder zumindest ein Material aus nachwachsenden Rohstoffen, und/oder zumindest ein biologisch und/oder marin abbaubares Material (5) umfasst.

## Beschreibung

Die Erfindung betrifft ein Klebeelement umfassend ein Trägersubstrat und eine an dem Trägersubstrat angeordnete Klebeschicht.

Bei Klebeelementen kann es sich insbesondere um Etiketten, Sicherheitsetiketten, Klebebänder, Sicherheitsklebebänder oder selbstklebende grafische Folienelemente handeln. Zudem sind auch funktionelle Etiketten bekannt, welche beispielsweise zur Verbindung von Gegenständen dienen können, oder welche Barriere-Eigenschaften aufweisen können. Derartige Klebeelemente werden für eine Vielzahl an Produkten in verschiedenen Branchen bzw. Anwendungsgebieten eingesetzt. Während Etiketten, Klebebänder und dergleichen zumeist in erster Linie der Dekorierung oder Kennzeichnungen von Produkten, Gegenständen oder Verpackungen dienen, kommt Sicherheitsetiketten, Sicherheitsklebebändern oder grafischen Folienelementen zusätzlich noch eine qualitätssichernde oder echtheitsnachweisende Aufgabe zu.

Um all diese Aufgaben zu erfüllen, bestehen Klebeelemente üblicherweise aus einer Mehrzahl an Schichten bzw. Folien aus verschiedenen Materialien, werden jedoch von einem Endverbraucher in der Regel nicht zuletzt aufgrund ihrer klebenden Eigenschaften zumeist nicht gesondert entsorgt. Dadurch kommt es bei der Entsorgung von mit Klebeelementen versehenen Gegenständen oftmals zu einer Kontamination der Entsorgungsfraktion.

Aufgabe der vorliegenden Erfindung war es, die noch bestehenden Nachteile des Standes der Technik zu überwinden und die Nachhaltigkeit von Klebeelementen weiter zu verbessern, wobei zugleich die geforderten technischen Eigenschaften der Klebeelemente nicht beeinträchtigt werden.

Diese Aufgabe wird durch ein Klebeelement gemäß den Ansprüchen gelöst.

Es sei darauf hingewiesen, dass der Begriff "insbesondere" in diesem Dokument so zu verstehen ist, dass es sich dabei um eine mögliche speziellere Ausbildung oder nähere Spezifizierung eines Gegenstands handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf, "aufweisend", "schließt ein", "einschließlich", "enthält", "enthaltend" und jegliche Variationen dieser eine nicht ausschließliche Einbeziehung abdecken.

An dieser Stelle sei auch darauf hingewiesen, dass der Begriff Schicht im Kontext der Erfindung sowohl eine einzelne Schicht als auch einen Verbund oder eine Schichtung aus mehreren Schichten beschreiben kann. Dabei kann es sich beispielsweise um mehrere gleichartige, aber auch um mehrere verschiedenartige Schichten oder Lagen handeln. Dasselbe gilt für den Begriff Folie.

Die Erfindung betrifft ein Klebeelement, bei welchem vorgesehen ist, dass das Klebeelement zumindest ein recyceltes Material, und/oder zumindest ein Material aus nachwachsenden Rohstoffen, und/oder zumindest ein biologisch und/oder marin abbaubares Material umfasst.

In dem vorliegenden Zusammenhang werden unter Klebeelement insbesondere Etiketten, Sicherheitsetiketten, Klebebänder, Sicherheitsklebebänder oder selbstklebende grafische Folienelemente verstanden. Klebeelemente umfassen dabei üblicherweise ein Trägersubstrat, bzw. eine Träger- oder Basisfolie, welches als Trägermaterial für beispielsweise Sicherheitselemente, diverse funktionale Schichten, sowie für Druckschichten dient. Mittels der Klebeschicht ist das Klebeelement an einer Oberfläche eines Gegenstandes dauerhaft oder bedarfsweise auch lösbar anbringbar. Bei der Klebeschicht kann es sich beispielsweise um eine Selbstklebeschicht oder um eine Schmelzklebeschicht handeln. Wenn die Klebeschicht als Schmelzklebeschicht ausgebildet ist, kann entweder der Kleber auf bzw. in eine Schmelze aufgebracht bzw. in diese eingebacht werden, oder das Klebeelement kann unter thermischer Einwirkung auf den Gegenstand aufgebracht werden.

Bei dem zumindest einen recycelten Material kann es sich um jegliche Art von recycelbaren Materialien oder Materialzusammensetzungen handeln. Beispielsweise sind damit jegliche Arten von Kunststoffen umfasst, sowie auch Metalle, Metalllegierungen oder Metallverbindungen. Auch diverse chemische Zusammensetzungen können recycelbar sein und damit als recyceltes Material in dem Klebeelement umfasst sein. Weil Klebeelemente zumeist aus mehreren Schichten, Folien bzw. Komponenten aufgebaut sind, kann es dabei zweckmäßig sein, wenn in diesen Einzelbestandteilen verschiedene Arten von recyceltem Material eingesetzt werden.

Dabei kann es sein, dass das zumindest eine recycelte Material, und/oder das zumindest eine Material aus nachwachsenden Rohstoffen, und/oder das zumindest eine biologisch und/oder marin abbaubare Material in der Klebeschicht, in dem Trägersubstrat und/oder in einer weiteren, auf dem Trägersubstrat applizierten Komponente, Schicht oder Folie, enthalten ist.

Dadurch wird die Nachhaltigkeit des Klebeelements bzw. dessen gesamter Produktlebenszyklus verbessert, da durch den Einsatz des zumindest einen recycelten Materials eine nachhaltige Herstellung ermöglicht ist. Durch den Einsatz von zumindest einem recycelten Material bei der Herstellung von Klebeelementen werden Mittel geschaffen, welche den steigenden ökologischen Anforderungen entsprechen und welche gleichzeitig die fallweise erforderliche Fälschungssicherheit garantieren.

Durch den alternativen oder zusätzlichen Einsatz von zumindest einem Material aus nachwachsenden Rohstoffen und/oder von biologisch und/oder marin abbaubarem Material kann der nachhaltige Lebenszyklus des Klebeelements weiter verbessert werden. Darüber hinaus kann damit ein wertvoller Beitrag zum Umweltschutz geleistet werden. Bei dem Material aus nachwachsenden Rohstoffen bzw. bei dem biologisch und/oder marin abbaubaren Material kann es sich um ein anderes Material als dem recycelten Material handeln. Besonders nachhaltig ist es jedoch, wenn es sich bei dem Material aus nachwachsenden Rohstoffen bzw. bei dem biologisch und/oder marin abbaubaren Material um dasselbe Material handelt, wie dem recycelten Material.

Dabei können für die Synthese der entsprechenden chemischen Rohstoffe nachwachsende Rohstoffe eingesetzt werden. Kunststoffe können beispielsweise unterschieden werden in sogenannte Drop-Ins und neue biobasierte Kunststoffe. Unter Drops-Ins werden Biokunststoffe verstanden, welche auf nachwachsenden Rohstoffen basieren und bei denen bestehende Prozesse und Wertschöpfungsketten bei der Verarbeitung, der Nutzung und des Recyclings im Wesentlich unverändert bleiben (z.B. PA, PU, PE, PP, PET, etc.). Neue biobasierte Kunststoffe ersetzen Kunststoffe auf fossiler Basis (z.B. Thermoplastische Stärke (TPS), Polymilchsäure (PLA), Cellulose- oder Lignin-basierte Kunststoffe, etc.), wobei eine Nutzung als Alternative zu fossilbasierten Kunststoffen noch nicht für alle biobasierten Kunststoffe vollständig etabliert ist.

Biologisch abbaubare Kunststoffe bestehen aus Polymeren, die durch Mikroorgansimen unter bestimmten Bedingungen zersetzt werden können. Der Begriff "marin abbaubar" oder "marine degradable" bezieht sich auf die Möglichkeit eines natürlichen Abbaus unter marinen Umweltbedingungen. Zu biologisch abbaubaren und zudem biobasierten Kunststoffen zählen beispielsweise Polyhydroxyalkanoate (PHA), oder thermoplastische Stärke (TPS). Zu biologisch abbaubaren Kunststoffen zählen beispielsweise Polymilchsäure (PLA), Polycaprolacton (PCL), Polybutylensuccinat (PBS), oder Polybutylenadipat-terephthalat (PBAT).

Durch den Einsatz von nachhaltig hergestellten Rohfolien und/oder Rohstoffen beispielsweise als Beschichtungsstoffe, können entsprechende Klebeelemente bzw. Etiketten nachhaltig hergestellt werden, ohne die geforderten technischen Eigenschaften wie beispielsweise Optik, Haftwirkung der Klebeschicht an Oberflächen, Bedruckbarkeit des Trägersubstrates oder einer auf dem Trägersubstrat applizierten Schicht, zu beeinträchtigen, oder zumindest ohne die geforderten technischen Eigenschaften in für den Anwendungsfall inakzeptabler Art und Weise zu beeinträchtigen.

Gemäß einer vorteilhaften Weiterbildung kann vorgesehen sein, dass das Klebeelement zumindest ein Sicherheitsmerkmal, oder zumindest ein Sicherheitselement mit zumindest einem Sicherheitsmerkmal umfasst. Durch das Vorsehen von Sicherheitsmerkmalen und/oder von Sicherheitselementen können Klebeetiketten zur Authentifizierung verschiedener Gegenstände, Produkte und Verpackungen eingesetzt werden, um Fälschungen zu vermeiden oder zumindest zu erschwerten. Dies erlaub einem Endbenutzer bzw. Endkunden legale und illegal gehandelte Waren zuverlässig zu unterscheiden.

Dabei kann es sein, dass das Sicherheitsmerkmal in einem Sicherheitselement ausgebildet ist, welches Sicherheitselement wiederum Bestandteile von Klebeelementen sein kann. Sicherheitsmerkmale (z.B. magnetischen Codierungen, Prägelackschichten, metallisierten Schichten, farbkippenden Materialien bzw. Schichten, etc.) erhöhen die Fälschungssicherheit und dienen der Echtheitszertifizierung von Sicherheitselementen, respektive von Klebeelementen bzw. von mit den Klebeelementen versehenen Gegenständen. Bei dem Sicherheitselement kann es sich beispielsweise auch um ein sogenanntes VOID-Etikett handeln, welches zur Indikation von Manipulationsversuchen an Gegenständen und Verpackungen eingesetzt werden kann. Im Wesentlichen umfassen VOID-Etiketten bzw. Klebeelemente mit Manipulationsnachweise ein Trägersubstrat, insbesondere eine Trägerfolie, wobei die Trägerfolie vorteilweise einen Kunststoff umfasst oder aus Kunststoff besteht, und eine an dem Trägersubstrat angeordnete Klebeschicht, bevorzugt eine Selbstklebeschicht. An der von der Sichtseite des VOID-Etiketts abgewandten Seite ist ein partielle Trennschicht ausgebildet, welche bei Betrachtung von der Sichtseite her beispielsweise als Buchstabe, Zahl, Zeichen, Symbol oder Teil eines Bildes, geformt ist. Unter der partiellen Trennschicht kann eine Schicht, beispielsweise eine Farbschicht oder eine metallische Schicht, ausgebildet sein bzw. kann die partielle Trennschicht in diese Schicht eingebettet sein. Wieder unterhalb der Schicht kann die Klebeschicht vorgesehen sein.

Sicherheitselemente können aus einer oder mehrerer Schichten oder auch aus einer oder mehrerer Folien aufgebaut sein. Der Begriff Schicht kann sowohl eine einzelne Schicht als auch einen Verbund oder eine Schichtung aus mehreren Schichten beschreiben. Dabei kann es sich beispielsweise um mehrere gleichartige, aber auch um mehrere, verschiedene Schichten oder Lagen handeln. An dieser Stelle sei darauf hingewiesen, dass zwischen den in diesem Dokument beschriebenen Schichten eine oder auch mehrere Zwischenschichten angeordnet sein können. Es ist somit nicht zwingend erforderlich, dass die beschriebenen Schichten einander kontaktieren. Weiters sei erneut darauf hingewiesen, dass der Begriff Schicht in diesem Dokument so zu verstehen ist, dass eine Schicht auch aus mehreren Teilschichten aufgebaut sein kann. Dasselbe gilt für den Begriff Folie. Gemäß einer vorteilhaften Weiterbildung kann vorgesehen sein, dass das Sicherheitsmerkmal und/oder das Sicherheitselement das zumindest eine recycelte Material, und/oder das zumindest eine Material aus nachwachsenden Rohstoffen, und/oder das zumindest eine biologisch und/oder marin abbaubare Material umfasst.

Des Weiteren kann es zweckmäßig sein, wenn das Klebeelement mindestens 10%, bevorzugt mindestens 20%, besonders bevorzugt mindestens 30%, insbesondere mindestens 50% des zumindest einen recycelten Materials und/oder des zumindest einen Materials aus nachwachsenden Rohstoffen und/oder des zumindest einen biologisch und/oder marin abbaubaren Materials umfasst oder wenn das Sicherheitselement mindestens 10%, bevorzugt mindestens 20%, besonders bevorzugt mindestens 30%, insbesondere mindestens 50% mehrerer recycelter Materialien und/oder mehrerer Materialien aus nachwachsenden Rohstoffen und/oder mehrerer biologisch und/oder marin abbaubarer Materialien umfasst.

Ferner kann vorgesehen sein, dass das zumindest eine recycelte Material, und/oder das zumindest eine Material aus nachwachsenden Rohstoffen, und/oder das zumindest eine biologisch und/oder marin abbaubare Material ein Cellulosefaser-freies Material ist.

Darüber hinaus kann vorgesehen sein, dass das Klebeelement, insbesondere das Trägersubstrat, mit zumindest einer Kunststoff-Folie, oder als Kunststoff-Folie ausgebildet ist, welche Kunststoff-Folie das zumindest eine recycelte Material und/oder das zumindest eine Material aus nachwachsenden Rohstoffen und/oder das zumindest eine biologisch und/oder marin abbaubare Material umfasst. Wenn das Klebeelement mit zumindest einem Sicherheitselement oder mit zumindest einem Sicherheitsmerkmal ausgebildet ist, kann es auch zweckmäßig sein, wenn diese auf einem als Kunststoff-Folie ausgebildeten Trägersubstrat, also auf einem Polymersubstrat, mittels einer oder mehreren Schichten aufgebracht sind. Bei der Kunststoff-Folie kann es sich beispielsweise um eine polymere Trägerfolie oder um ein Polymersubstrat handeln, auf welche das zumindest eine Sicherheitsmerkmal, sowie gegebenenfalls weitere Schichten wie Schutzlacke, aufgebracht sein können.

Vorteilhaft ist auch eine Ausprägung, gemäß welcher vorgesehen sein kann, dass das zumindest eine recycelte Material und/oder das zumindest eine biologisch und/oder marin abbaubare Material einen chemisch recycelten Kunststoff und/oder einen mechanisch recycelten Kunststoff umfasst, insbesondere einen lichtdurchlässigen, recycelten Kunststoff umfasst, wobei das zumindest eine recycelte Material und/oder das zumindest eine biologisch und/oder marin abbaubare Material bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermoplastische Stärke (TPS), Polymilchsäure (PLA), Polycaprolacton (PCL), Polybutylensuccinat (PBS), und Polybutylenadipat-terephthalat (PBAT) und/oder Mischungen und/oder Co-Polymere und/oder Verbundmaterialien dieser Materialien umfasst oder aus zumindest einem dieser Materialien hergestellt ist.

Mit chemischem Recycling sind Verfahren gemeint, bei welchen Kunststoffe durch thermische Einwirkung bzw. Energieeinwirkung bzw. durch chemische Prozesse in kürzere Moleküle aufgespalten werden, sodass ein erneuter Einsatz in nachfolgenden Herstellungsverfahren wie beispielsweise in einer Polymerisation, möglich ist. Einem chemischen Recycling können beispielsweise sogenannte PCR-Kunststoffe ("post consumer recycling"), PIR-Kunststoffe ("post industrial recycling"), sowie CCU-Kunststoffe ("carbon capture and utilization") zugeführt werden.

Zur Herstellung von PCR-Kunststoffen werden Kunststoffabfälle nach dem Endverbrauch wieder in Rohstoffe oder Monomere für die Herstellung neuer Rohstoffe verwendet und daraus beispielsweise Polymer-Folien oder Lackbestandteile hergestellt. So können z.B. PET-, PE- und PP-Folien mit einem gewissen Anteil an PCR-Rohstoffen bezogen werden. Die Herstellung von PIR-Kunststoffe erfolgt zumeist im Wesentlichen analog zur Herstellung von PCR-Kunststoffen. Allerdings kommen dabei Industrieabfälle zum Einsatz, welche in der Regel weniger stark verunreinigt bzw. sortenreiner sind. Zur Herstellung von CCU-Kunststoffen wird Kohlendioxid aus Abgasströmen oder aus der Luft abgeschieden und dient dann als Rohstoff bzw. Baustein für die Herstellung von Energieträgern wie Methan oder Methanol oder für die Herstellung von chemischen Rohstoffen wie Polycarbonaten oder PVC. Hierzu sind sowohl chemische, als auch biologische Verfahren mit Algen oder Mikroorganismen bekannt.

Mechanisch recycelter Kunststoff kann im Zuge eines stofflichen Recyclings gewonnen werden. Unter anderem können PCR-Kunststoffe und PIR-Kunststoffe mechanisch recycelt werden. Kunststoffabfälle werden nach der jeweiligen Kunststoffart sortiert und zu Rezyklaten aufbereitet, welche als Ausgansstoff für neue Produkte dienen können und damit Kunststoffe aus Neumaterialien ersetzten können. Bei dieser Art des Recyclings bleibt die ursprüngliche chemische Struktur der Polymere erhalten.

Gemäß einer Weiterbildung ist es möglich, dass das zumindest eine recycelte Material und/oder das zumindest eine biologisch und/oder marin abbaubare Material zumindest ein recyceltes metallisches Material, insbesondere ausgewählt aus der Gruppe Silber, Kupfer, Aluminium, Gold, Platin, Niob, Zinn, oder aus Nickel, Titan, Vanadium, Chrom, Kobalt und Palladium oder Legierungen dieser Materialien, insbesondere Kobalt-Nickel-Legierungen, und/oder zumindest ein hochbrechendes dielektrisches Material mit einem Brechungsindex von größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere oder Schichten aus Metalloxiden, wie beispielsweise unstöchiometrisches Aluminiumoxid, Kupferoxide, oder Chromoxide umfasst und/oder aus zumindest einem recycelten metallischen Material aus Druckfarben oder Lacken mit metallischen Pigmenten, insbesondere ausgewählt aus der Gruppe Aluminium, Silber, Kupfer, Gold, Platin, Niob, Zinn, oder aus Nickel, Titan, Vanadium, Chrom, Kobalt und Palladium oder Legierungen dieser Materialien, insbesondere Kobalt-Nickel-Legierungen hergestellt ist.

Durch den Einsatz von nachhaltigen Rohstoffen für verschiedene Beschichtungsstoffe (z.B. Lackbestandteile, Metalle wie Aluminium aus recyceltem Aluminium, etc.) ist es möglich geworden, nachhaltige Klebeelemente herzustellen.

Sicherheitsmerkmale erhöhen die Fälschungssicherheit und dienen der Echtheitszertifizierung von Klebeelementen. Es kann zweckmäßig sein, wenn das zumindest eine Sicherheitsmerkmal durch eine geprägte Schicht, eine partielle metallisierte Schicht, eine fluoreszierende Schicht, eine gedruckte Schicht, eine magnetische Codierung und/oder ein optisch variables und/oder optisch wirksames Merkmal, insbesondere durch ein Hologramm und/oder eine farbkippende Beschichtung, beispielsweise eine zumindest ein farbkippendes Dünnschichtelement aufweisende Beschichtung, und/oder durch in Transmission oder Reflexion optisch erkennbare Merkmale, maschinenlesbare Merkmale (wie z.B. Magnetcodierungen) und/oder durch elektromagnetische Wellen absorbierende und/oder reemittierende Stoffe bzw. Merkmale gebildet ist. Das zumindest eine Sicherheitsmerkmal kann auch durch lumineszierende bzw. phosphoreszierende Beschichtungen gebildet sein.

Unter optisch variable und/oder optisch wirksame Sicherheitsmerkmale fallen beispielsweise auch optisch wirksame Reliefstrukturen, insbesondere Spiegel, Beugungsgitter, Hologramme, Kinoforme, asymmetrische Beugungsstrukturen, Mattstrukturen, insbesondere anisotrope Mattstrukturen, Blazegitter, Beugungsstrukturen Nullter Ordnung, fresnelartige Freiformflächen, plasmonische Strukturen, reflektive Strukturen, insbesondere Mikrospiegelanordnungen, lichtbrechende oder fokussierende Strukturen, insbesondere Mikrolinsenanordnung, Volumenhologramme und Farbkippeffekte (auf Basis von Dünnfilmelementen, Flüssigkristallen, farbkippenden Pigmenten, etc.).

Darüber hinaus kann vorgesehen sein, dass das Klebeelement als ein selbstklebendes Klebeelement ausgebildet ist, und dass das Klebeelement, insbesondere das Trägersubstrat oder die Kunststoff-Folie, eine PET-Folie umfasst, welche PET-Folie mit zumindest 30% PCR-Material, bevorzugt mit zumindest 50% PCR-Material, hergestellt ist.

Es kann auch sein, dass die Kunststoff-Folie als metallisierte PE-Folie ausgebildet ist, welche metallisierte PE-Folie eine metallische Schicht aufweist, wobei die metallisierte PE-Folie mit zumindest 20% PCR-Material, bevorzugt mit zumindest 50% PCR-Anteil, hergestellt ist. Derartige metallisierte Folien sind der Fachwelt beispielsweise aus der WO 2020/221753 A1 bekannt geworden, und weisen bevorzugt folgende Schichten in der angegebenen Reihenfolge auf: ein Trägersubstrat aus einer Kunststoff-Folie, eine Lackschicht als Haftvermittlerschicht, eine, insbesondere direkt, auf die Lackschicht aufgebrachte metallische Schicht, und optional eine Deckschicht.

Darüber hinaus kann die Kunststoff-Folie als metallisierte PE-Folie ausgebildet sein, welche metallisierte PE-Folie eine metallische Schicht aufweist, wobei die metallisierte PE-Folie mit PCR-Material und PIR-Material im Verhältnis von zumindest im Wesentlichen 1:1 hergestellt ist. Zudem kann es vorteilhaft sein, wenn die metallisierte PE-Folie mit 100% oder zumindest annähernd 100% PCR-Material hergestellt ist.

Gemäß einer weiteren Ausbildung kann vorgesehen sein, dass das Klebeelement ein Klebeelement mit Manipulationsnachweis ist, welches mit zumindest 70% PCR-Material, bevorzugt mit zumindest 90% PCR-Anteil, hergestellt ist. Gattungsgemäße Klebeelemente werden oftmals als VOID-Etiketten bezeichnet und werden zur Indikation von Manipulationsversuchen an Gegenständen und Verpackungen eingesetzt. Insbesondere ist es mittels VOID-Etiketten möglich, einen relativ kostengünstigen Fälschungsschutz zu gewährleisten, respektive auf einfache Art und Weise einen Echtheitsnachweis oder auch einen Qualitätsnachweis anzubringen. Sobald das VOID -Etikett vom Untergrund gelöst wird, erscheint auf der Etiketten-Oberfläche ein zuvor bzw. im aufgeklebten Zustand unsichtbares Sicherheitsmerkmal. Dabei handelt es sich zumeist um Schriftzüge, Bilder, Muster und dergleichen.

Zum besseren Verständnis der Erfindung wird diese anhand der nachfolgenden Figuren näher erläutert.

Es zeigen jeweils in stark vereinfachter, schematischer Darstellung:
- Fig. 1: ein Klebeelement mit Manipulationsnachweis appliziert auf der Oberfläche eines Gegenstandes in Schnittansicht,
- Fig. 2: das Klebeelement aus Fig. 1 während dem Ablösen von der Oberfläche des Gegenstandes, wobei ein Teil des Klebeelements auf der Oberfläche verbleibt,
- Fig. 3: das Klebeelement aus Fig. 1 während dem rückstandsfreien Ablösen von der Oberfläche des Gegenstandes.
- Fig. 4: ein weiteres Ausführungsbeispiel eines Klebeelements.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

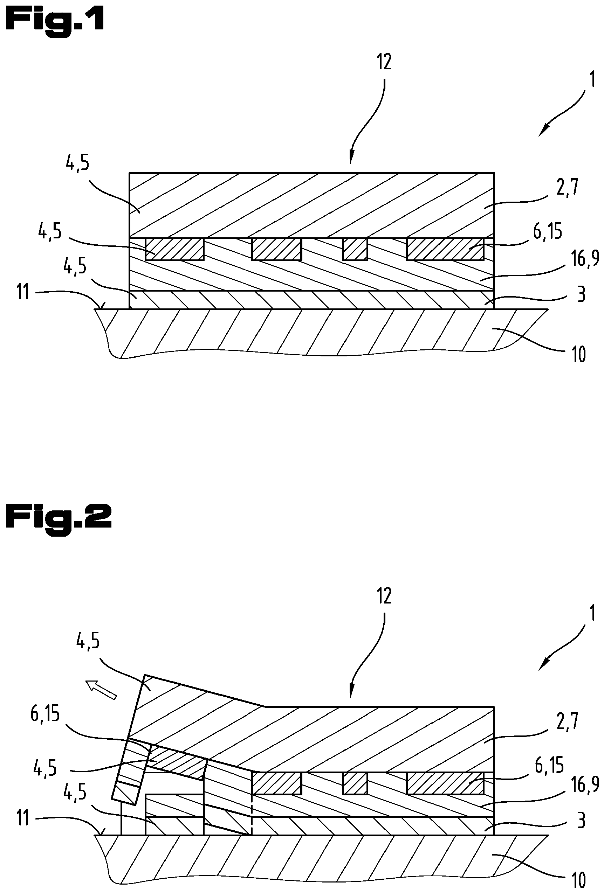

In der Fig. 1 ist ein Klebeelement 1 mit Manipulationsnachweis in Schnittansicht gezeigt, welches auf der Oberfläche 11 eines Gegenstandes 10 appliziert ist. Gattungsgemäße Klebeelemente 1 werden oftmals als VOID-Etiketten bezeichnet und werden zur Indikation von Manipulationsversuchen an Gegenständen 10 und Verpackungen eingesetzt.

Im Wesentlichen umfasst das Klebeelement 1 gemäß dem Ausführungsbeispiel ein Trägersubstrat 2, insbesondere eine Trägerfolie bzw. eine Kunststoff-Folie 7, und eine an dem Trägersubstrat 2 angeordnete Klebeschicht 3, bevorzugt eine Selbstklebeschicht. Das Klebeelement 1 umfasst zumindest ein recyceltes Material 4, und/oder zumindest ein Material aus nachwachsenden Rohstoffen, und/oder zumindest ein biologisch und/oder marin abbaubares Material 5. An der von der Sichtseite 12 des Klebeelements 1 abgewandten Seite ist ein Sicherheitselement 6 in Form einer partiellen Trennschicht 15 ausgebildet. Diese partielle Trennschicht 15 kann beispielsweise bei Betrachtung von der Sichtseite 12 her als Buchstabe, Zahl, Zeichen, Symbol oder Teil eines Bildes, geformt sein. Unter der partiellen Trennschicht 15 kann eine Schicht 16 ausgebildet sein bzw. kann die partielle Trennschicht 15 in die Schicht 16 eingebettet sein. Wieder unterhalb der Schicht 16 kann gemäß dem Beispiel in der Fig. 1 eine Klebeschicht 3 vorgesehen sein.

Bei der Schicht 16 kann es sich um eine Farbschicht, insbesondere um eine gedruckte Farbschicht, handeln. Die Farbschicht kann dabei partiell und/oder mehrfarbig ausgebildet sein. Es kann aber auch sein, dass die Schicht 16 als metallische Schicht 9 ausgebildet ist.

Sobald das Klebeelement 1 bzw. das VOID-Etikett von der Oberfläche 11 des Gegenstandes 10 gelöst wird, "erscheint" auf der Etiketten-Oberfläche ein zuvor bzw. im aufgeklebten Zustand unsichtbares Sicherheitsmerkmal, bzw. wird ein durch die partielle Trennschicht 15 geformter Schriftzüge, Bilder, Muster und dergleichen sichtbar.

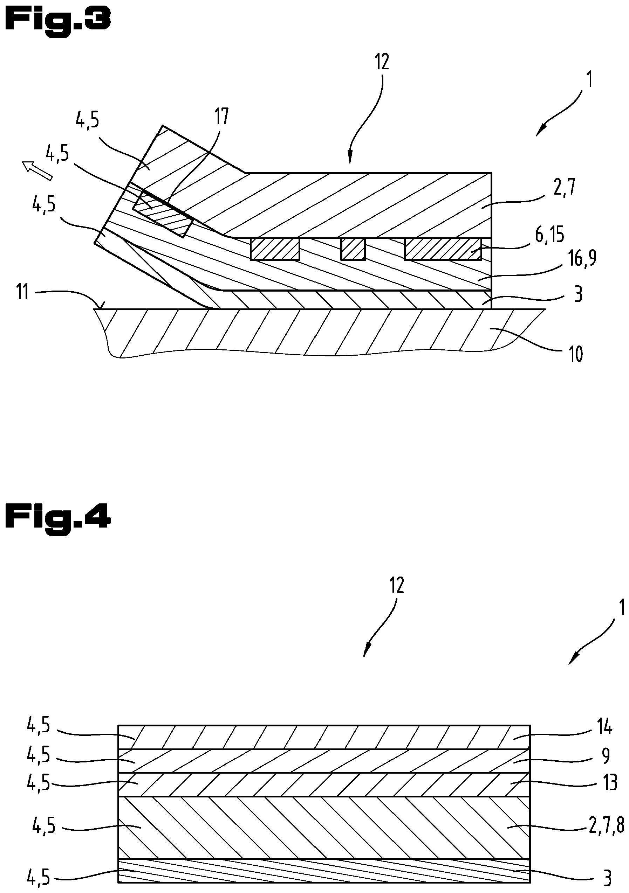

Je nach Gattung des Klebeelements 1 mit Manipulationsnachweis kann das Ablösen von der Oberfläche 11 unterschiedlich erfolgen. Zwei Ablöse-Varianten sind durch die Fig. 2 und 3 skizziert.

In der Fig. 2 ist gezeigt, dass das Trägersubstrat 2 bzw. die Kunststoff-Folie 7 gemeinsam mit der am Trägersubstrat 2 anhaftenden partiellen Trennschicht 15 abgelöst wird, wobei gemeinsam mit der partiellen Trennschicht 15 auch die neben dieser partiellen Trennschicht 15 liegenden, also die nicht von der partiellen Trennschicht 15 überdeckten Bereiche der Schicht 16 und der Klebeschicht 3 mitabgelöst werden. Das bedeutet, dass sich die Schicht 16 und die Klebeschicht 3 beim Ablösen trennt bzw. dass die Schicht 16 und die Klebeschicht 3 beim Ablösen teilweise reißen. Die unter der partiellen Trennschicht 15 liegenden Bereiche der Klebeschicht 3 sowie der Schicht 16 verbleiben auf dem Gegenstand 10.

Durch das Entfernen bzw. Ablösen des Trägersubstrates 2 wird ein durch die partielle Trennschicht 15 gebildetes Muster oder dergleichen für einen Betrachter sichtbar. So erkennt der Betrachter, dass an dem Gegenstand 10 eine Manipulation stattgefunden hat.

Alternativ zur Darstellung gemäß Fig. 2 wäre es auch denkbar, dass die Klebeschicht 3 vollständig oder zumindest weitgehend vollständig auf der Oberfläche 11 des Gegenstandes 10 verbleibt, sodass sich beim Ablösen des Trägersubstrates 2 die partielle Trennschicht 15, sowie die danebenliegenden, nicht von der partiellen Trennschicht 15 überdeckten Bereiche der Schicht 16 ablösen. Diese Variante ist jedoch figürlich nicht gezeigt.

Zudem wäre es denkbar, dass das Trägersubstrat 2 bzw. die Kunststoff-Folie 7 gemeinsam mit den neben der partiellen Trennschicht 15 liegenden Bereichen der Schicht 16, sowie auch der Klebeschicht 3 abgelöst wird, sodass die partielle Trennschicht 15 gemeinsam mit den unter dieser liegenden Bereichen der Schicht 16, sowie auch der Klebeschicht 3 auf der Oberfläche 11 des Gegenstandes 10 verbleiben. Auch diese Variante ist figürlich nicht gezeigt.

In der Fig. 3 ist eine Variante gezeigt, bei welcher die Haftwirkung der Klebeschicht 3 gegenüber der Oberfläche 11 des Gegenstandes 10 weniger stark ausgeprägt ist, sodass das gesamte Klebeelement 1 rückstandsfrei oder zumindest weitgehend rückstandsfrei abgelöst werden kann. Während dem Ablösen kann sich zwischen der partiellen Trennschicht 15 und dem Trägersubstrat 2 ein Luftspalt 17 bilden. Durch das Entstehen dieses Luftspaltes 17 kann ein durch die partielle Trennschicht 15 gebildetes Muster oder dergleichen für einen Betrachter sichtbar werden.

Das in den Fig. 1 bis 3 gezeigte Klebeelement 1 kann mit zumindest 70% PCR-Material, bevorzugt mit zumindest 90% PCR-Anteil, hergestellt sein.

Die Fig. 1 bis 3 werden nachfolgend weitgehend in einer Zusammenschau beschrieben, um unnötige Wiederholungen zu vermeiden.

Das Klebeelement 1 umfasst ein Trägersubstrat 2 und eine an dem Trägersubstrat 2 angeordnete Klebeschicht 3. Mittels dieser Klebeschicht 3 ist das Klebeelement 1 an einer Oberfläche 11 eines Gegenstandes 10 anbringbar. Das Klebeelement 1 umfasst zumindest ein recyceltes Material 4, und/oder zumindest ein Material aus nachwachsenden Rohstoffen, und/oder zumindest ein biologisch und/oder marin abbaubares Material 5.

Das Klebeelement 1 kann gemäß dem dargestellten Ausführungsbeispiel zumindest ein Sicherheitsmerkmal, bzw. zumindest ein Sicherheitselement 6 mit zumindest einem Sicherheitsmerkmal umfassen. Im dargestellten Beispiel ist das Klebeelement 1 durch ein als partielle Trennschicht 15 ausgebildetes Sicherheitselement 6 ausgebildet.

Bei dem Trägersubstrat 2 kann es sich beispielsweise um ein Cellulosefaser-basiertes Substrat oder - wie im dargestellten Ausführungsbeispiel - um ein polymerbasiertes Substrat, wie eine Kunststoff-Folie 7 handeln. Dabei kann das Trägersubstrat 2 mit zumindest einer Kunststoff-Folie 7 umfassend das zumindest eine recycelte Material 4 und/oder das zumindest eine Material aus nachwachsenden Rohstoffen und/oder das zumindest eine biologisch und/oder marin abbaubare Material 5 ausgebildet sein.

Es versteht sich von selbst, dass die Darstellung der Figuren lediglich grobschematisch zu interpretieren ist. So ist das Sicherheitselement 6 bzw. die partielle Trennschicht 15 in den Fig. 1 bis 3 mit rechteckigem Querschnitt skizziert, wobei dem Fachmann natürlich eine Vielzahl möglicher spezieller Ausbildungen bekannt ist, auf welche an dieser Stelle nicht näher eingegangen wird.

Das Sicherheitselement 6 ist im gezeigten Ausführungsbeispiel gemäß den Fig. 1 bis 3 unter dem Trägersubstrat 2 angeordnet. Es wäre aber auch denkbar, dass das oder auch die Sicherheitselemente 6 in das Trägersubstrat 2 partiell oder vollständig eingebettet sind. Darüber hinaus könnten das oder die Sicherheitselemente 6 auch unter dem Trägersubstrat 2 nicht wie skizziert direkt, sondern distanziert durch eine oder mehrere Zwischenschichten appliziert sein. Das Trägersubstrat 2 und auch das oder die Sicherheitselemente 6 können auch noch mittels einer oder mehrerer weiterer Schichten, partiell oder vollständig, bedeckt bzw. überdeckt sein. Beispielsweise können Schichten wie Schutzlacke, Heißsiegellacke, Kleber, etc. aufgebracht sein. Diese Schichten können ebenso zumindest ein recyceltes Material 4, und/oder zumindest ein Material aus nachwachsenden Rohstoffen, und/oder zumindest ein biologisch und/oder marin abbaubares Material 5 umfassen. Beispielsweise kann das recycelte Material 4 in der Form eines recycelten Lackes oder recycelter Lackbestandteile in einer Schicht, beispielsweise einer Schutzschicht, umfasst sein. Dabei kann es auch sein, dass der Lack oder zumindest Lackbestandteile nachwachsende Rohstoffe umfassen.

Es hat sich hier als zweckmäßig erwiesen, wenn das Klebeelement 1 mindestens 10%, bevorzugt mindestens 20%, besonders bevorzugt mindestens 30%, insbesondere mindestens 50% des zumindest einen recycelten Materials 4 und/oder des zumindest einen Materials aus nachwachsenden Rohstoffen und/oder des zumindest einen biologisch und/oder marin abbaubaren Materials 5 umfasst. Es kann aber auch sein, dass das Klebeelement 1 mindestens 20%, besonders bevorzugt mindestens 30%, insbesondere mindestens 50% mehrerer verschiedener recycelter Materialien und/oder mehrerer Materialien aus nachwachsenden Rohstoffen und/oder mehrerer biologisch und/oder marin abbaubarer Materialien umfasst.

Wie bereits beschrieben, umfassen die in den Fig. 1 bis 3 gezeigten Klebeelemente 1 zumindest ein recyceltes Material 4 und/oder zumindest ein Material aus nachwachsenden Rohstoffen, und/oder zumindest ein biologisch und/oder marin abbaubares Material 5. Das recycelte Material 4 und/oder das zumindest eine Material aus nachwachsenden Rohstoffen, und/oder das zumindest eine biologisch und/oder das marin abbaubares Material 5 kann dabei in sämtlichen Komponenten des Klebeelements 1 enthalten sein, also beispielsweise sowohl in den Sicherheitselementen 6 bzw. Sicherheitsmerkmalen, als auch in dem Trägersubstrat 2, in der Klebeschicht 3 oder in einer weiteren Schicht, beispielsweise in der Schutzschicht. Natürlich muss es sich hierbei nicht immer um dasselbe Material handeln. So kann beispielsweise das Sicherheitselement 6 Anteile von recyceltem Aluminium aufweisen, während das Trägersubstrat 2 zumindest teilweise aus recyceltem Kunststoff besteht, oder umgekehrt. Die Komponenten können mindestens 10%, bevorzugt mindestens 20%, besonders bevorzugt mindestens 30%, insbesondere mindestens 50% des zumindest einen recycelten Materials 4 umfassen. Bei dem Material aus nachwachsenden Rohstoffen bzw. bei dem biologisch und/oder marin abbaubaren Material 5 kann es sich grundsätzlich um dasselbe Material handeln, wie bei dem recycelten Material 4.

Zweckmäßigerweise kann es sich bei dem in dem Klebeelement 1, beispielsweise in den Sicherheitselementen 6 oder in dem Trägersubstrat 2, umfassten zumindest einen recycelten Material 4, und/oder bei dem zumindest einen Material aus nachwachsenden Rohstoffen, und/oder bei dem zumindest einen biologisch und/oder marin abbaubaren Material 5 um ein Cellulosefaser-freies Material handeln.

Das in den Klebeelementen 1, insbesondere in dem Trägersubstrat 2, umfasste zumindest eine recycelte Material 4 und/oder das zumindest eine biologisch und/oder marin abbaubare Material 5 kann einen chemisch recycelten Kunststoff und/oder einen mechanisch recycelten Kunststoff umfassen. Insbesondere kann es einen lichtdurchlässigen, recycelten Kunststoff umfassen, wobei das zumindest eine recycelte Material 4 bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC). Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermoplastische Stärke (TPS), Polymilchsäure (PLA), Polycaprolacton (PCL), Polybutylensuccinat (PBS), und Polybutylenadipat-terephthalat (PBAT) und/oder Mischungen und/oder Co-Polymere und/oder Verbundmaterialien dieser Materialien umfassen oder aus zumindest einem dieser Materialien hergestellt sein.

Das zumindest eine recycelte Material 4 und/oder das zumindest eine biologisch und/oder marin abbaubare Material 5 kann zumindest ein recyceltes metallisches Material, insbesondere ausgewählt aus der Gruppe Silber, Kupfer, Aluminium, Gold, Platin, Niob, Zinn, oder aus Nickel, Titan, Vanadium, Chrom, Kobalt und Palladium oder Legierungen dieser Materialien, insbesondere Kobalt-Nickel-Legierungen, und/oder zumindest ein hochbrechendes dielektrisches Material mit einem Brechungsindex von größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere oder Schichten aus Metalloxiden, wie beispielsweise unstöchiometrisches Aluminiumoxid, Kupferoxide, oder Chromoxide umfassen und/oder aus zumindest einem recycelten metallischen Material aus Druckfarben oder Lacken mit metallischen Pigmenten, insbesondere ausgewählt aus der Gruppe Aluminium, Silber, Kupfer, Gold, Platin, Niob, Zinn, oder aus Nickel, Titan, Vanadium, Chrom, Kobalt und Palladium oder Legierungen dieser Materialien, insbesondere Kobalt-Nickel-Legierungen hergestellt sein.

Die in dem dargestellten Sicherheitselement 6 umfassten Sicherheitsmerkmale können beispielsweise durch eine geprägte Schicht, eine partielle metallisierte Schicht, eine fluoreszierende Schicht, eine gedruckte Schicht, eine magnetische Codierung und/oder ein optisch variables und/oder optisch wirksames Merkmal, insbesondere durch ein Hologramm und/oder eine farbkippende Beschichtung, beispielsweise eine zumindest ein farbkippendes Dünnschichtelement aufweisende Beschichtung, und/oder durch in Transmission oder Reflexion optisch erkennbare Merkmale, maschinenlesbare Merkmale und/oder durch elektromagnetische Wellen absorbierende und/oder reemittierende Stoffe bzw. Merkmale gebildet sein.

Das in den Fig. 1 bis 3 gezeigte Klebeelement 1 kann beispielsweise als ein selbstklebendes Klebeelement 1 ausgebildet sein, wobei das Klebeelement 1, insbesondere das Trägersubstrat 2 oder die Kunststoff-Folie 7, eine PET-Folie umfasst, welche PET-Folie mit zumindest 30% PCR-Material, bevorzugt mit zumindest 50% PCR-Material, hergestellt ist.

Das in den Fig. 1 bis 3 gezeigte Klebeelement 1 kann beispielsweise auch als Klebeelement 1 mit Manipulationsnachweis, also als sogenanntes VOID-Etikett, ausgebildet sein, welches mit zumindest 70% PCR-Material, bevorzugt mit zumindest 90% PCR-Anteil, hergestellt ist.

Die Fig. 4 ein weiteres Ausführungsbeispiel eines Klebeelements 1. Um unnötige Wiederholungen zu vermeiden, wird hier insbesondere auf die detaillierte Beschreibung der Fig. 1 bis 3 verwiesen bzw. Bezug genommen.

Die Fig. 4 zeigt ein weiteres Ausführungsbeispiel eines Klebeelements 1 mit einer Kunststoff-Folie 7, wobei die Kunststoff-Folie 7 als metallisierte PE-Folie 8 ausgebildet ist. Diese metallisierte PE-Folie 8 weist eine metallische Schicht 9 auf und ist mit zumindest 20% PCR-Material, bevorzugt mit zumindest 50% PCR-Anteil, hergestellt. Die in der Fig. 4 gezeigte metallisierte PE-Folie 8 kann zudem mit PCR-Material und PIR-Material im Verhältnis von zumindest im Wesentlichen 1:1 hergestellt sein.

Die metallische Schicht 9 kann zumindest ein recyceltes metallisches Material, insbesondere ausgewählt aus der Gruppe Silber, Kupfer, Aluminium, Gold, Platin, Niob, Zinn, oder aus Nickel, Titan, Vanadium, Chrom, Kobalt und Palladium oder Legierungen dieser Materialien, insbesondere Kobalt-Nickel-Legierungen, und/oder zumindest ein hochbrechendes dielektrisches Material mit einem Brechungsindex von größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere oder Schichten aus Metalloxiden, wie beispielsweise unstöchiometrisches Aluminiumoxid, Kupferoxide, oder Chromoxide umfassen und/oder aus zumindest einem recycelten metallischen Material aus Druckfarben oder Lacken mit metallischen Pigmenten, insbesondere ausgewählt aus der Gruppe Aluminium, Silber, Kupfer, Gold, Platin, Niob, Zinn, oder aus Nickel, Titan, Vanadium, Chrom, Kobalt und Palladium oder Legierungen dieser Materialien, insbesondere Kobalt-Nickel-Legierungen hergestellt sein.

Das in der Fig. 4 gezeigte Klebeelement 1 weist von der untersten Schicht, also von der Klebeschicht 3 in Richtung zur Sichtseite 12 betrachtet folgende Schichten auf: eine Klebeschicht 3, ein Trägersubstrat 2 aus einer Kunststoff-Folie 7, insbesondere aus einer PE-Folie 8, eine Lackschicht 13 als Haftvermittlerschicht, eine, insbesondere direkt, auf die Lackschicht 13 aufgebrachte metallische Schicht 9, und eine Deckschicht 14. Dabei können grundsätzlich sämtliche Schichten bzw. Komponenten zumindest ein recyceltes Material 4, und/oder zumindest ein Material aus nachwachsenden Rohstoffen, und/oder zumindest ein biologisch und/oder marin abbaubares Material 5 umfassen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Klebeelement
- 2: Trägersubstrat
- 3: Klebeschicht
- 4: recyceltes Material
- 5: biologisch und/oder marin abbaubares Material
- 6: Sicherheitselement
- 7: Kunststoff-Folie
- 8: metallisierte PE-Folie
- 9: metallische Schicht
- 10: Gegenstand
- 11: Oberfläche
- 12: Sichtseite
- 13: Lackschicht
- 14: Deckschicht
- 15: partielle Trennschicht
- 16: Schicht
- 17: Luftspalt

## Patentansprüche

1. Klebeelement (1), umfassend ein Trägersubstrat (2) und eine an dem Trägersubstrat (2) angeordnete Klebeschicht (3), **dadurch gekennzeichnet, dass** das Klebeelement (1) zumindest ein recyceltes Material (4), und/oder zumindest ein Material aus nachwachsenden Rohstoffen, und/oder zumindest ein biologisch und/oder marin abbaubares Material (5) umfasst.

2. Klebeelement (1) nach Anspruch 1, **dadurch gekennzeichnet, dass** das Klebeelement (1) zumindest ein Sicherheitsmerkmal, oder zumindest ein Sicherheitselement (6) mit zumindest einem Sicherheitsmerkmal umfasst.

3. Klebeelement (1) nach Anspruch 2, **dadurch gekennzeichnet, dass** das Sicherheitsmerkmal und/oder das Sicherheitselement (6) das zumindest eine recycelte Material (4), und/oder das zumindest eine Material aus nachwachsenden Rohstoffen, und/oder das zumindest eine biologisch und/oder marin abbaubare Material (5) umfasst.

4. Klebeelement (1) nach einem der vorhergehenden Ansprüche, **dadurch gekennzeichnet, dass** das Klebeelement (1) mindestens 10%, bevorzugt mindestens 20%, besonders bevorzugt mindestens 30%, insbesondere mindestens 50% des zumindest einen recycelten Materials (4) und/oder des zumindest einen Materials aus nachwachsenden Rohstoffen und/oder des zumindest einen biologisch und/oder marin abbaubaren Materials (5) umfasst, oder dass das Klebeelement (1) mindestens 10%, bevorzugt mindestens 20%, besonders bevorzugt mindestens 30%, insbesondere mindestens 50% mehrerer recycelter Materialien und/oder mehrerer Materialien aus nachwachsenden Rohstoffen und/oder mehrerer biologisch und/oder marin abbaubarer Materialien umfasst.

5. Klebeelement (1) nach einem der vorhergehenden Ansprüche, **dadurch gekennzeichnet, dass** das zumindest eine recycelte Material (4), und/oder das zumindest eine Material aus nachwachsenden Rohstoffen, und/oder das zumindest eine biologisch und/oder marin abbaubare Material (5) ein Cellulosefaser-freies Material ist.

6. Klebeelement (1) nach einem der vorhergehenden Ansprüche, **dadurch gekennzeichnet, dass** das Klebeelement (1), insbesondere das Trägersubstrat (2), mit zumindest einer Kunststoff-Folie (7), oder als Kunststoff-Folie (7) ausgebildet ist, welche Kunststoff-Folie (7) das zumindest eine recycelte Material (4) und/oder das zumindest eine Material aus nachwachsenden Rohstoffen und/oder das zumindest eine biologisch und/oder marin abbaubare Material (5) umfasst.

7. Klebeelement (1) nach einem der vorhergehenden Ansprüche, **dadurch gekennzeichnet, dass** das zumindest eine recycelte Material (4) und/oder das zumindest eine biologisch und/oder marin abbaubare Material (5) einen chemisch recycelten Kunststoff und/oder einen mechanisch recycelten Kunststoff umfasst, insbesondere einen lichtdurchlässigen, recycelten Kunststoff umfasst, wobei das zumindest eine recycelte Material (4) und/oder das zumindest eine biologisch und/oder marin abbaubare Material (5) bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermoplastische Stärke (TPS), Polymilchsäure (PLA), Polycaprolacton (PCL), Polybutylensuccinat (PBS), und Polybutylenadipat-terephthalat (PBAT) und/oder Mischungen und/oder Co-Polymere und/oder Verbundmaterialien dieser Materialien umfasst oder aus zumindest einem dieser Materialien hergestellt ist.

8. Klebeelement (1) nach einem der vorhergehenden Ansprüche, **dadurch gekennzeichnet, dass** das zumindest eine recycelte Material (4) und/oder das zumindest eine biologisch und/oder marin abbaubare Material (5) zumindest ein recyceltes metallisches Material, insbesondere ausgewählt aus der Gruppe Silber, Kupfer, Aluminium, Gold, Platin, Niob, Zinn, oder aus Nickel, Titan, Vanadium, Chrom, Kobalt und Palladium oder Legierungen dieser Materialien, insbesondere Kobalt-Nickel-Legierungen, und/oder zumindest ein hochbrechendes dielektrisches Material mit einem Brechungsindex von größer als 1,65, insbesondere ausgewählt aus der Gruppe Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen(II,III)oxid (Fe₃O₄) und Eisen(III)oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere oder Schichten aus Metalloxiden, wie beispielsweise unstöchiometrisches Aluminiumoxid, Kupferoxide, oder Chromoxide umfasst und/oder aus zumindest einem recycelten metallischen Material aus Druckfarben oder Lacken mit metallischen Pigmenten, insbesondere ausgewählt aus der Gruppe Aluminium, Silber, Kupfer, Gold, Platin, Niob, Zinn, oder aus Nickel, Titan, Vanadium, Chrom, Kobalt und Palladium oder Legierungen dieser Materialien, insbesondere Kobalt-Nickel-Legierungen hergestellt ist.

9. Klebeelement (1) nach einem der Ansprüche 2 bis 7, **dadurch gekennzeichnet, dass** das zumindest eine Sicherheitsmerkmal durch eine geprägte Schicht, eine partielle metallisierte Schicht, eine fluoreszierende Schicht, eine gedruckte Schicht, eine magnetische Codierung und/oder ein optisch variables und/oder optisch wirksames Merkmal, insbesondere durch ein Hologramm und/oder eine farbkippende Beschichtung, beispielsweise eine zumindest ein farbkippendes Dünnschichtelement aufweisende Beschichtung, und/oder durch in Transmission oder Reflexion optisch erkennbare Merkmale, maschinenlesbare Merkmale und/oder durch elektromagnetische Wellen absorbierende und/oder reemittierende Stoffe bzw. Merkmale gebildet ist.

10. Klebeelement (1) nach einem der vorhergehenden Ansprüche, **dadurch gekennzeichnet, dass** das Klebeelement (1) als ein selbstklebendes Klebeelement (1) ausgebildet ist, und dass das Klebeelement (1), insbesondere das Trägersubstrat (2) oder die Kunststoff-Folie (7), eine PET-Folie umfasst, welche PET-Folie mit zumindest 30% PCR-Material, bevorzugt mit zumindest 50% PCR-Material, hergestellt ist.

11. Klebeelement (1) nach einem der Ansprüche 6 bis 10, **dadurch gekennzeichnet, dass** die Kunststoff-Folie (7) als metallisierte PE-Folie (8) ausgebildet ist, welche metallisierte PE-Folie (8) eine metallische Schicht (9) aufweist, wobei die metallisierte PE-Folie (8) mit zumindest 20% PCR-Material, bevorzugt mit zumindest 50% PCR-Anteil, hergestellt ist.

12. Klebeelement (1) nach einem der Ansprüche 6 bis 11, **dadurch gekennzeichnet, dass** die Kunststoff-Folie (7) als metallisierte PE-Folie (8) ausgebildet ist, welche metallisierte PE-Folie (8) eine metallische Schicht (9) aufweist, wobei die metallisierte PE-Folie (8) mit PCR-Material und PIR-Material im Verhältnis von zumindest im Wesentlichen 1:1 hergestellt ist.

13. Klebeelement (1) nach einem der vorhergehenden Ansprüche, **dadurch gekennzeichnet, dass** das Klebeelement (1) ein Klebeelement (1) mit Manipulationsnachweis ist, welches mit zumindest 70% PCR-Material, bevorzugt mit zumindest 90% PCR-Anteil, hergestellt ist.
